# EUROPÄISCHE PATENTSCHRIFT

(11) **EP 0 597 067 B1**
(45) Veröffentlichungstag und Bekanntmachung des Hinweises auf die Patenterteilung: **28.07.1999**
(21) Anmeldenummer: 93911723.0
(22) Anmeldetag: 18.05.1993
(51) Int. Cl.: H04B 3/00, H04B 3/56

(54) **SCHALTUNGSANORDNUNG ZUR ANKOPPLUNG EINER SENDEEINHEIT AN EINE ÜBERTRAGUNGSLEITUNG**
CIRCUIT FOR COUPLING A TRANSMITTER UNIT TO A TRANSMISSION LINE
CIRCUIT DE COUPLAGE D'UNE UNITE EMETTRICE AVEC UNE LIGNE DE TRANSMISSION

(30) Priorität: 26.05.1992 CH 169592
(43) Veröffentlichungstag der Anmeldung: 18.05.1994
(73) Patentinhaber: Siemens Schweiz AG, 8047 Zürich (CH)
(72) Erfinder: BIDESE, Werner, CH-8048 Zürich (CH)
(86) Internationale Anmeldenummer: CH9300125
(87) Internationale Veröffentlichungsnummer: WO9325011

(56) Entgegenhaltungen:
- EP-A- 0 167 234
- EP-A- 0 417 542
- DE-A- 2 461 564
- US-A- 4 142 178
- US-A- 4 646 319
- WEISS: Uebersicht über die allgemeine Elektrotechnik S.365,, Wintersche Verlagshandlung, Füssen

## Beschreibung

Die vorliegende Erfindung betrifft eine Schaltungsanordnung nach dem Oberbegriff des Patentanspruchs 1.

Zur Einspeisung oder Entnahme von Signalen werden Anschlussleitungen oft galvanisch mit Zweidrahtleitungen verbunden. Bei derartigen Ankopplungen, wie sie z.B. in U.S. Pat. Nr. 4,646,319 gezeigt sind, ist zum Kontaktieren jeweils das Entfemen oder Durchstossen der Isolierschicht der Zweidrahtleitung erforderlich. Ein mehrmaliges Ankoppeln von Anschlussleitungen hat deshalb Beschädigungen der Zweidrahtleitung zur Folge. Ferner ist das unerlaubte Ankoppeln von unberechtigten Dritten an die Zweidrahtleitung leicht möglich. In einem Telefonnetz mit galvanischer Ankopplung können sich unberechtigte Dritte daher leicht zuschalten. Aus der europäischen Offenlegungsschrift EP-OS 0 417 542 ist eine Vorrichtung zur induktiven Ankopplung von Sendespulen an eine Zweidrahtleitung bekannt, durch die diese Probleme weitgehend beseitigt werden. Dabei ist ein dreischenkliger Ferritkern vorgesehen, dessen Joch zum Einlegen der Ankoppelspule bzw. der Zweidrahtleitung derart schwenkbar angeordnet ist, dass die zwei Drähte der Übertragungsleitung je zwischen dem mittleren Schenkel und einem der äusseren Schenkel durchführbar sind. Die z.B. mit der Sendeeinheit verbundene Ankoppelspule umschliesst den mittleren Schenkel mit mehreren Windungen. Zur Übertragung einer Information zwischen zwei an die Übertragungsleitung angekoppelten Teilnehmerendgeräten wird vom Sender ein moduliertes Hochfrequenzsignal an die primärseitige Ankoppelspule abgegeben, das mit dem aus der Ankoppelspule und der Übertragungsleitung gebildeten Transformator transformiert und über die sekundärseitige Übertragungsleitung zum empfangenden Endgerät geführt wird. Die primärseitig vom Sender wahrgenommene Last Z1 entspricht idealisiert dem Produkt aus der sekundärseitig anliegenden Last Z2 und dem Quadrat des Übersetzungsverhältnisses (N1/N2)². Parallel dazu tritt noch die relativ kleine Hauptinduktivität des Transformators in Erscheinung, die einen Strom erfordert, der denjenigen in der transformierten Last Z1 um ein Vielfaches übertrifft. Die Hauptinduktivität wird dabei besonders klein, falls die durch die Übertragungsleitung gebildete Sekundärwicklung des Transformators nur wenige Windungen aufweist. Die induktive Ankopplung ist daher, insbesondere für netzunabhängig betriebene Endgeräte, bei denen normalerweise nur sehr tiefe Versorgungsspannungen zur Verfügung stehen und von denen nur kleinere Ausgangsleistungen abgegeben werden können, problematisch. Normalerweise kann mit diesen Endgeräten nur eine geringe Reichweite erzielt werden, innerhalb der ein zufriedenstellendes Verhältnis von Signal zu Rauschen vorhanden ist. Falls, z.B. zur Vergrösserung der Reichweite, die an die Übertragungsleitung abgegebene Leistung erhöht wird, ergibt sich eine entsprechend tiefere Lebensdauer der Batterien, mit denen das Endgerät gespeist wird. Bei Endgeräten, die vom Netz gespeist werden, müsste eine entsprechend grösser dimensionierte Stromversorgungseinheit vorgesehen werden.

Der vorliegenden Erfindung liegt daher die Aufgabe zugrunde, eine Schaltungsanordnung anzugeben, mit der die beschriebenen Nachteile vermieden werden. Insbesondere soll die Reichweite zwischen den einzelnen Endgeräten erhöht, die den Endgeräten entnommene Leistung reduziert und das Verhältnis von Signal zu Rauschen verbessert werden.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Durch das erfindungsgemässe Verfahren und die erfindungsgemässe Schaltungsanordnung wird der der Ankopplungseinheit zuzuführende Speisestrom stark reduziert, was sich insbesondere für netzunabhängig betriebene Endgeräte günstig auswirkt. Bei gleichzeitig reduzierter Stromzufuhr wird dabei die an die Übertragungsleitung abgegebene Leistung gesteigert. Die Qualität der übertragenen Signale wird dadurch erheblich verbessert.

Die Erfindung wird nachfolgend anhand einer Zeichnung beispielsweise näher erläutert. Dabei zeigt :
- Fig. 1: eine Schaltungsanordnung mit einem Transformator, dessen Primärwicklung mit einer Sendeeinheit verbunden ist,
- Fig. 2: eine Schaltungsanordnung mit zwei primärseitigen Hilfswicklungen und
- Fig. 3: eine erfindungsgemässe Schaltungsanordnung mit einer Seendeeinheit und einer Vorrichtung zum automatischen Abstimmen eines Resonanzkreises.

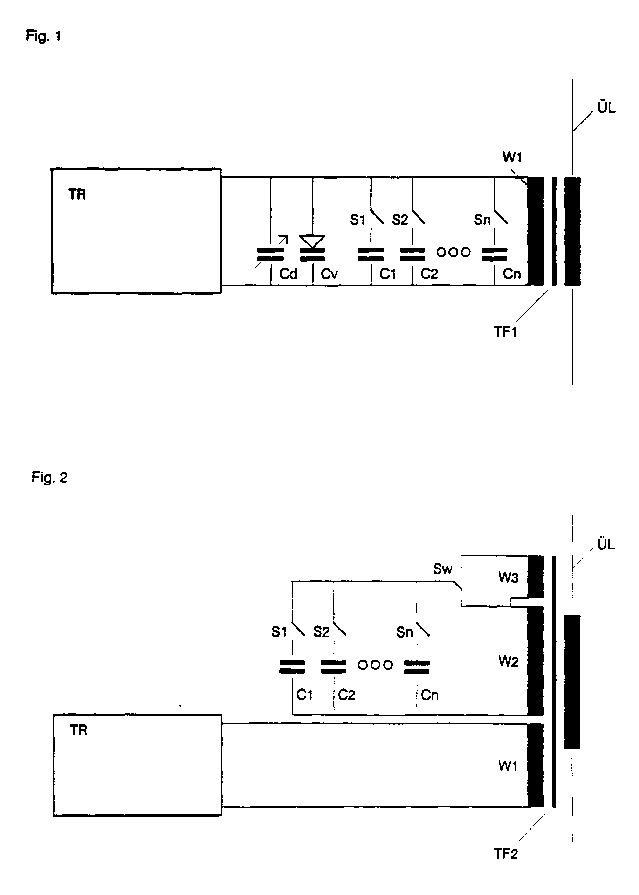

Fig. 1 zeigt eine Sendeeinheit TR, die über eine Ankoppeleinheit bzw. die Primärwicklungen eines Transformators TF1 an eine Übertragungsleitung ÜL angekoppelt ist, welche die Sekundärwicklung des Transformators TF1 bildet. Diese Sekundärwicklung weist normalerweise nur eine Windung auf. Die Sendeeinheit TR, die ein moduliertes Hochfrequenzsignal abgibt, besteht beispielsweise aus einem Vor- und Endverstärker. Die aus den beschriebenen Vorgaben resultierende Hauptinduktivität erfordert einen sehr hohen Strom, der den üblicherweise verwendeten Versorgungsquellen, insbesondere den mit Batterien betriebenen Versorgungsquellen nicht oder nicht während längerer Zeit entnommen werden kann. Dieses Problem wird durch den nachfolgend beschriebenen erfindungsgemässen Einsatz eines passiven Stromverstärkers gelöst. Durch das Zuschalten von einem oder mehreren Kondensatoren C1, ..., Cn über Schalter S1, ..., Sn an die Wicklung W1 wird ein Parallel-Resonanzkreis gebildet, der auf das Hoch- bzw. Trägerfrequenzsignal abgestimmt wird. Der abgestimmte Resonanzkreis verhält sich dabei wie ein reiner Wirkwiderstand Rp. Der Strom, der dem Quotient aus Spannung Ur und Wirkwiderstand Rp entspricht, erreicht im Resonanzfall den Minimalwert. In den Blindwiderständen pulsieren dabei Resonanzströme lr, die weit höhere Werte erreichen als der von aussen zufliessende Strom I. Mit geringerer von aussen zugeführter Leistung lassen sich daher in den Sekundärwicklungen grössere Ströme induzieren. Selbstverständlich können im Resonanzkreis auch abstimmbare Kondensatoren (Drehkondensatoren Cd, Kapazitätsdioden Cv, etc.) vorteilhaft verwendet werden.

In Fig. 2 ist die Sendeeinheit TR mit einer ersten Spule bzw. Wicklung W1 eines Transformators TF2 verbunden. Durch Spulen bzw. Wicklungen W2, W3 des Transformators TF2 und Kondensatoren C1, ..., Cn wird primärseitig ein abstimmbarer Parallel-Resonanzkreis gebildet, der über den Eisenkern an die Wicklung W1 transformatorisch angekoppelt ist. Die Kondensatoren C1, ..., Cn lassen sich nach Bedarf zuschalten. Die Wicklung W3 ist über einen Schalter Sw zuschaltbar zur Wicklung W2 vorgesehen, damit der Resonanzkreis über einen weiten Bereich abstimmbar ist. Dabei kann vorgesehen sein, dass die Wicklung W2 oder die Wicklung W3 allein oder beide Wicklungen W2, W3 seriell zusammengeschaltet den Kondensatoren C1, ..., Cn zuschaltbar sind.

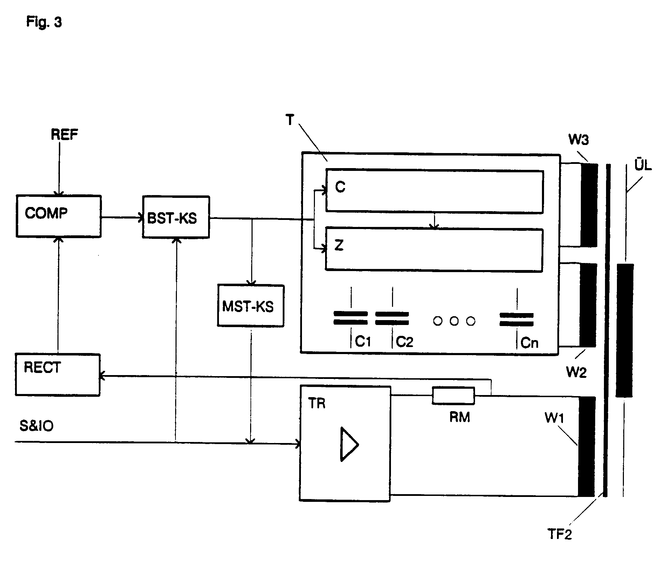

In Fig. 3 ist eine erfindungsgemässe Schaltungsanordnung gezeigt, in der der Parallelresonanzkreis automatisch abstimmbar ist. Kernstück der Schaltung ist die Abstimmeinheit T, durch die die Kondensatoren C1, ..., Cn und die Wicklung W3 und/oder W2 während dem Abstimmvorgang immer derart zugeschaltet werden, dass sich die Resonanzfrequenz des Resonanzkreises kontinuierlich ändert, bis eine Schaltung feststellt, dass sich die Resonanzfrequenz genügend nahe bei der Trägerfrequenz des Sendesignals befindet. Als vorteilhaft hat sich erwiesen, den von der Sendeeinheit TR an die Wicklung W1 abgegeben Strom I zu messen und den Resonanzkreis abzustimmen, bis der Strom I minimal ist oder unter einen vorgegebenen Schwellwert fällt. Der Minimalwert des Stromes I tritt gemäss obigen Ausführungen immer dann auf, wenn an der Sendeeinheit TR nur noch der relativ hohe Wirkwiderstand Rp des Resonanzkreises auftritt. Der Minimalwert des Stromes 1 tritt daher nur im Resonanzfall auf. Die gezeigte Schaltungsanordnung besteht aus einer bistabilen Kippstufe BST-KS, deren Ausgang mit den Eingängen eines Taktgebers C und eines Zählers Z verbunden ist, die in der Abstimmvorrichtung T vorgesehen sind. Die Sendeeinheit TR ist über einen Widerstand Rm mit der Wicklung W1 und dem Eingang einer Gleichrichterstufe RECT verbunden, deren Ausgang und eine eine Spannungsschwelle führende Leitung REF je mit einem Eingang einer Vergleichsstufe COMP verbunden sind. Der Ausgang der Vergleichsstufe COMP sowie eine mit einer nicht gezeigten Kontrolleinheit verbundene Signal- und Befehlsleitung S&lO sind ferner je mit einem Eingang der bistabilen Kippstufe BST-KS verbunden. Der Ausgang der bistabilen Kippstufe BST-KS ist weiterhin über eine monostabile Kippstufe MST-KS mit der Kontrolleinheit bzw. der Leitung S&lO verbunden, über die ferner die zu übertragenden Signale der Sendeeinheit TR zugeführt werden.

Die Schaltungsanordnung nach Fig. 3 funktioniert wie folgt :

Der bistabilen Kippstufe BST-KS wird über die Leitung S&lO ein Stansignal für den Abstimmvorgang zugeführt, wonach die mit der Kippstufe BST-KS verbundenen Taktgeber C und Zähler Z aktiviert werden. Der Zähler Z, der vom Taktgeber C Taktsignale erhält. beginnt den Zählvorgang ab einem bestehenden oder willkürlich gewählten Zählerstand. Als Zähler Z kann ein einfacher Dualzähler vorgesehen sein, dessen Ausgänge über Schalter S0, ..., Sn bzw. Sw die Kondensatoren C1, ..., Cn oder die Wicklung W3 und/oder W2 an den Resonanzkreis schalten. Die Schalter S0, ..., Sn bzw. Sw werden beispielsweise mittels Schalttransistoren realisiert. Die anzuschaltenden Kondensatoren C1, ..., Cn und Wicklungen W werden entsprechend der Wertigkeit der Zählerausgänge gewählt, damit sich ein gleichmässiger Abstimmverlauf ergibt. Die Sendeeinheit TR gibt während dem Abstimmvorgang ein Signal mit der vorgesehenen Trägerfrequenz an die Wicklung W1 ab. Über dem Widerstand Rm wird eine zum Strom I proportionale Spannung abgegriffen und dem Eingang der Gleichrichterstufe RECT zugeführt, die eine dazu entsprechende Gleichspannung dem Eingang der Vergleichsstufe COMP zuführt. Falls diese Spannung nahe bei Resonanz kleiner als die der Vergleichsstufe COMP über die Leitung REF zugeführte Spannungsschwelle wird, wird ein Signal an die bistabile Kippstufe BST-KS abgegeben, wonach diese zurückgesetzt wird. Durch das Zurücksetzen der bistabilen Kippstufe BST-KS werden der Taktgeber C und der Zähler Z angehalten, so dass der momentane Zählerstand festgehalten wird. Ferner wird die monostabile Kippstufe MST-KS aktiviert, die über die Leitung S&lO den erfolgreichen Abschluss des Abstimmvorganges an die Kontrolleinheit zurückmeldet. Zur Reduktion der Verbindungsleitungen werden die Sende- und Befehlssignale nur auf einer Leitung geführt. Die Signale werden der bistabilen Kippstufe BST-KS vorzugsweise über einen Schmitt-Trigger zugeführt, der das ankommende Signal in ein sauberes Rechtecksignal umwandelt. Einfachheitshalber können natürlich auch separate Befehlsleitungen vorgesehen werden, die von der Sendesignalleitung getrennt sind. Vorzugsweise ist der Zähler Z auch mit einem D/A-Wandler verbindbar, der eine zum Zählerstand proportionale Spannung an einen variablen Kondensator Cd, Cv abgibt.

Ferner wird bei Anwendungen im Bereich der Telefonie normalerweise nicht nur für den Sprachkanal, sondern auch für den Signalisierungskanal eine Abstimmvorrichtung vorgesehen. Dem Signalisierungskanal ist meistens nur eine Frequenz zugewiesen. Der Sprachkanal weist im Gegensatz dazu mehrere Trägerfrequenzen auf. die über einen breiten Frequenzbereich verteilt sein können. D.h., der Resonanzkreis des Sprachkanals muss über einen weiteren Bereich abstimmbar sein, was durch die mögliche Zuschaltung der Wicklung W3 und/oder W2 erreicht wird. Der Signalisierungs- und der Sprachkanal weisen dabei eine Schaltungsanordnung auf, die im Prinzip der in Fig. 3 gezeigten Anordnung entspricht. Der Taktgeber C kann für beide Kanäle gemeinsam verwendet und über ein ODER-Tor eingeschaltet werden. Ebenso kann die Rückmeldung über den Abschluss des Abstimmvorganges des Signalisierungs- oder Sprachkanals über eine gemeinsame Leitung erfolgen.

Ferner liesse sich eine Abstimmvorrichtung mit Hilfe eines Mikroprozessors aufbauen. Dabei wäre jedoch mit einem erhöhten Leistungsbedarf zu rechnen.

Falls der Sender nach Abschluss eines Gesprächs ausgeschaltet wird, bleibt der Zählerstand erhalten. Ferner wird anstatt der Sendeeinheit TR ein Ersatzwiderstand an die Wicklung W1 angeschaltet, damit die Impedanzverhältnisse auf der Übertragungsleitung ÜL unverändert bleiben.

## Patentansprüche

1. Schaltungsanordnung zur Ankopplung einer Sendeeinheit (TR) an eine Übertragungsleitung (ÜL), wobei die anzukoppelnde Sendeeinheit (TR) mit einer Primärwicklung (W1) eines Transformators (TF) verbunden ist, dessen Sekundärwicklung die Übertragungsleitung (ÜL) ist, **dadurch gekennzeichnet**, dass die Primärwicklung (W1) Teil eines Parallel-Schwingkreises ist, der anhand einer Abstimmvorrichtung (T) durch Zuschaltung oder Justierung von Kondensatoren (C1, ..., Cn) auf die Trägerfrequenz des zu übertragenden Signales derart abstimmbar ist, dass der Parallel-Schwingkreis auf den Resonanzfall eingestellt wird oder dass entweder die am Parallel-Schwingkreis anliegende Spannung einen vorgegebenen Schwellwert überschreitet oder dass der dem Parallel-Schwingkreis zugeführte Strom einen vorgegebenen Schwellwert unterschreitet, dass ein Gleichrichter (RECT) vorgesehen ist, der eine zu dem dem Parallel-Schwingkreis zugeführten Strom proportionale Spannung oder die am Parallel-Schwingkreis anliegende Spannung gleichrichtet, dass eine Vergleichsschaltung (COMP) vorgesehen ist, welche die Abstimmvorrichtung (T) anhält, sobald die vom Gleichrichter (RECT) abgegebene Spannung einen vorgesehenen Schwellwert unter- bzw. überschreitet.

2. Schaltungsanordnung nach Anspruch 1, **dadurch gekennzeichnet,** dass variable oder feste Kondensatoren (C1, ..., Cn) mit der ersten oder weiteren einzelnen oder seriell zusammenschaltbaren Primärwicklungen (W1, W2, ..., Wm) verbunden oder verbindbar sind.

3. Schaltungsanordnung nach Anspruch 1 oder 2, **dadurch gekennzeichnet,** dass die Sendeeinheit (TR) mit der Primärwicklung (W1) des Transformators (TF) über einen Widerstand (Rm) verbunden ist, an dem die zu dem dem Parallel-Schwingkreis zugeführten Strom proportionale Spannung abgreifbar ist.

4. Schaltungsanordnung nach Anspruch 1, 2 oder 3, **dadurch gekennzeichnet,** dass eine Befehlsleitung (S&lO) vorgesehen ist, die vorzugsweise über einen Schmitt-Trigger mit dem ersten Eingang einer bistabilen Kippstufe (BST-KS) verbunden ist, deren zweiter Eingang mit dem Ausgang der Vergleichsschaltung (COMP) und deren Ausgang mit dem Eingang der Abstimmvorrichtung (T) und dem Eingang einer ausgangsseitig mit der Befehlsleitung (S&lO) verbundenen monostabilen Kippstufe (MST-KS) verbunden ist, dass das Bauteil (Rm) einerseits mit dem Ausgang der Sendeeinrichtung (TR) und andererseits mit der Primärwicklung (W1) sowie über den Gleichrichter (RECT) mit dem ersten Eingang der Vergleichsschaltung (COMP) verbunden ist, deren zweiter Eingang mit einer eine Spannungsschwelle führenden Leitung (REF) verbunden ist.

5. Schaltungsanordnung nach einem der vorhergehenden Ansprüche, **dadurch gekennzeichnet,** dass die Abstimmvorrichtung (T) aus einem mit einem Taktgeber (C) verbundenen Zähler (Z) besteht, dessen Ausgänge mit den Steuereingängen von Schalttransistoren verbunden sind, über die die Kondensatoren (C1, ..., Cn) und die Wicklungen (W2, ..., Wm) derart an den Parallel-Schwingkreis anschaltbar sind, dass sich die Resonanzfrequenz des Parallel-Schwingkreises entsprechend dem Zählerstand ändert oder dass der Zähler (Z) mit einer Einheit verbunden ist, die eine dem Zählerstand entsprechende Steuerspannung an einen variablen Kondensator anlegt.

6. Schaltungsanordnung nach einem der vorhergehenden Ansprüche, **dadurch gekennzeichnet,** dass das Joch des Transformators (TF) schwenkbar angeordnet ist und dass die als Sekundärwicklung vorgesehene Übertragungsleitung (ÜL) bei ausgeschwenktem Joch in den Eisenkern einlegbar ist.

7. Schaltungsanordnung nach einem der vorhergehenden Ansprüche, **dadurch gekennzeichnet,** dass die Übertragungsleitung (ÜL) eine Zweidrahtleitung ist und der Transformator (TF) aus einem dreischenkligen Eisenkern besteht, dessen mittlerer Schenkel von der Zweidrahtleitung (ÜL) und den Primärwicklungen (W1, W2, ..., Wm) umschlossen ist.

8. Schaltungsanordnung nach einem der vorhergehenden Ansprüche, **dadurch gekennzeichnet,** dass die Sendeeinheit (TR) abschaltbar und durch einen Widerstand ersetzbar ist.

## Claims

1. Circuit arrangement for coupling a transmitting unit (TR) to a transmission line (ÜL), wherein the transmitting unit (TR) to be coupled is connected to a primary winding (W1) of a transformer (TF), the secondary winding of which is the transmission line (ÜL), characterised in that the primary winding (W1) is part of a parallel oscillating circuit, which, with the aid of a tuning device (T), by connecting or adjusting capacitors (C1, ..., Cn), can be tuned to the carrier frequency of the signal to be transmitted, in such a way that the parallel oscillating circuit is set to the resonance case or that either the voltage present at the parallel oscillating circuit exceeds a predetermined threshold value or the current supplied to the parallel oscillating circuit falls below a predetermined threshold value, in that there is provided a rectifier (RECT), which rectifies a voltage which is proportional to the current supplied to the parallel oscillating circuit or the voltage which is present at the parallel oscillating circuit, and in that there is provided a comparator circuit (COMP), which stops the tuning device (T) as soon as the voltage output by the rectifier (RECT) exceeds or falls below a provided threshold value.

2. Circuit arrangement according to claim 1, characterised in that variable or fixed capacitors (C1, ..., Cn) are connected or can be connected to the first or further individual or serially interconnectable primary windings (W1, W2, ..., Wm).

3. Circuit arrangement according to claim 1 or 2, characterised in that the transmitting unit (TR) is connected to the primary winding (W1) of the transformer (TF) by way of a resistance (Rm), at which the voltage which is proportional to the current supplied to the parallel oscillating circuit can be tapped.

4. Circuit arrangement according to claim 1, 2 or 3, characterised in that there is provided an instruction line (S&IO), which is preferably connected by way of a Schmitt trigger to the first input of a bistable flip-flop (BST-KS), the second input of which is connected to the output of the comparator circuit (COMP) and the output of which is connected to the input of the tuning device (T) and the input of a monostable flip-flop (MST-KS) which is connected, on the output side, to the instruction line (S&IO), and in that the component (Rm) is connected on the one hand to the output of the transmitting device (TR) and on the other hand to the primary winding (W1) and also by way of the rectifier (RECT) to the first input of the comparator circuit (COMP), the second input of which is connected to a lead (REF) which leads to a voltage threshold.

5. Circuit arrangement according to one of the preceding claims, characterised in that the tuning device (T) comprises a counter (Z) connected to a clock generator (C), the outputs of which counter are connected to the control inputs of switching transistors, by way of which the capacitors (C1, ..., Cn) and the windings (W2, ..., Wm) can be connected to the parallel oscillating circuit in such a way that the resonant frequency of the parallel oscillating circuit changes in accordance with the counter content or the counter (Z) is connected to a unit which applies to a variable capacitor a control voltage corresponding to the counter content.

6. Circuit arrangement according to one of the preceding claims, characterised in that the yoke of the transformer (TF) is arranged pivotably, and in that when the yoke is swung out, the transmission line (ÜL) which is provided as secondary winding can be placed in the iron core.

7. Circuit arrangement according to one of the preceding claims, characterised in that the transmission line (ÜL) is a two-wire line and the transformer (TF) comprises a three-limb iron core, the centre limb of which is surrounded by the two-wire line (ÜL) and the primary windings (W1, W2, ..., Wm).

8. Circuit arrangement according to one of the preceding claims, characterised in that the transmitting unit (TR) can be switched off and replaced by a resistance.

## Revendications

1. Circuit pour le couplage d'une unité émettrice (TR) sur une ligne de transmission (ÜL), l'unité émettrice (TR) à coupler étant reliée à un enroulement primaire (W1) d'un transformateur (TF) dont l'enroulement secondaire est la ligne de transmission (ÜL), caractérisé par le fait que l'enroulement primaire (W1) fait partie d'un circuit résonnant parallèle qui est accordable à l'aide d'un dispositif d'accord (T) par le branchement ou le réglage de condensateurs (C1 à Cn) sur la fréquence porteuse du signal à transmettre de telle sorte que le circuit résonnant parallèle est réglé sur le cas de résonance ou que, soit la tension appliquée au circuit résonnant parallèle devient supérieure à une valeur de seuil prédéterminée, soit le courant envoyé au circuit résonnant parallèle devient inférieur à une valeur de seuil prédéterminée, il est prévu un redresseur (RECT) qui redresse une tension proportionnelle au courant envoyé au circuit résonnant parallèle ou la tension appliquée au circuit résonnant parallèle, il est prévu un circuit comparateur (COMP) qui arrête le dispositif d'accord (T) dès que la tension appliquée par le redresseur (RECT) devient inférieure ou supérieure à une valeur de seuil prévue.

2. Circuit selon la revendication 1, caractérisé par le fait que des condensateurs variables ou fixes (C1 à Cn) sont reliés ou peuvent être reliés au premier enroulement primaire ou aux autres enroulements primaires individuellement ou branchés en série (W1, W2 à Wm).

3. Circuit selon la revendication 1 ou 2, caractérisé par le fait que l'unité émettrice (TR) est reliée à l'enroulement primaire (W1) du transformateur (TF) par l'intermédiaire d'une résistance (Rm) à laquelle la tension proportionnelle au courant envoyé au circuit résonnant parallèle peut être prélevée.

4. Circuit selon la revendication 1, 2 ou 3, caractérisé par le fait qu'il est prévu une ligne d'instruction (S&IO) qui est reliée de préférence par l'intermédiaire d'un trigger de Schmitt à la première entrée d'une bascule bistable (BST-KS), dont la deuxième entrée est reliée à la sortie du circuit comparateur (COMP) et dont la sortie est reliée à l'entrée du dispositif d'accord (T) et à l'entrée d'une bascule monostable (MST-KS) reliée en sortie à la ligne d'instruction (S&IO), le composant (Rm) est relié d'un côté à la sortie de l'unité émettrice (TR) et de l'autre côté à l'enroulement primaire (W1) ainsi que, par l'intermédiaire du redresseur (RECT), à la première entrée du circuit comparateur (COMP) dont la deuxième entrée est reliée à une ligne (REF) conduisant un seuil de tension.

5. Circuit selon l'une des revendications précédentes, caractérisé par le fait que le dispositif d'accord (T) est constitué d'un compteur (Z) qui est relié à une horloge (C), dont les sorties sont reliées aux entrées de commande de transistors de commutation par l'intermédiaire desquels les condensateurs (C1 à Cn) et les enroulements (W2 à Wm) peuvent être raccordés au circuit réscnnant parallèle de telle sorte que la fréquence de résonance du circuit résonnant parallèle varie en fonction de l'état du compteur ou que le compteur (Z) est relié à une unité qui applique à un condensateur variable une tension de commande correspondant à l'état du compteur.

6. Circuit selon l'une des revendications précédentes, caractérisé par le fait que la culasse du transformateur (TF) est montée basculante et que la ligne de transmission (ÜL) prévue comme enroulement secondaire peut être mise dans le noyau de fer lorsque la culasse est basculée.

7. Circuit selon l'une des revendications précédentes, caractérisé par le fait que la ligne de transmission (ÜL) est une ligne bifilaire et le transformateur (TF) est constitué d'un noyau de fer à trois colonnes, dont la colonne médiane est entourée par la ligne bifilaire (ÜL) et par les enroulements primaires (W1, W2 à Wm).

8. Circuit selon l'une des revendications précédentes, caractérisé par le fait que l'unité émettrice (TR) peut être arrêtée et remplacée par une résistance.
